# EUROPEAN PATENT SPECIFICATION

(11) **EP 1 126 672 B1**
(45) Date of publication and mention of the grant of the patent: **09.05.2007**
(21) Application number: 01500039.1
(22) Date of filing: 16.02.2001
(51) Int. Cl.: H04L 25/08, H04L 25/24

(54) **Protection equipment for pulse code modulation installations**
Schutzvorrichtung für Pulskodemodulationseinrichtungen
Dispositif de protection pour installations qui utilisent la modulation par impulsions codées

(30) Priority: 18.02.2000 ES 200000384
(43) Date of publication of application: 22.08.2001
(73) Proprietor: Telefonica, S.A., 28013 Madrid (ES)
(72) Inventor: Campoy Cervera, Luis Miguel c/o Telefonica S.A., 28028 Madrid (ES)
(74) Representative: Carpintero Lopez, Francisco

(56) References cited:
- WO-A-91/11840
- DE-A- 4 111 687
- US-A- 4 586 104

## Description

### OBJECT OF THE INVENTION

The present invention relates to a protection equipment for pulse code modulation (PCM) installations which provides essential novelty properties and considerable advantages compared to similar devices known in the state of the art and which share the same purpose.

More specifically, the invention relates to a transient suppressor for both overvoltages and overcurrents, with characteristics such that it protects regenerators of new PCM line equipment from transients induced in the communications cable. This protection is coordinated with the gas dischargers provided in said regenerators.

The present invention is of application in the field of telecommunications, and more specifically in protection systems for remote powered communication equipment.

### BACKGROUND AND SUMMARY OF THE INVENTION

A high rate of incidents has been detected involving component breakage in regenerators of the New Pulse Code Modulation Line Equipment (NPCMLE), both in presence of storms with atmospheric discharges and in telecommunications lines located near electrical power distribution lines, due either to programmed manoeuvres of the power distribution grid or to incidents in said grid (atmospheric discharges, line breaks, unbalances, etc.) which couple to the telecommunications line.

The international PC7 publication WO91/11840 describes an arrangement for protecting an electrical circuit from voltage transients which comprises a threshold foldback device, an overvoltage protection device, and a capacitor. The arrangement described therein, is not adapted for a pulse code modulation installation.

The solution disclosed is based on installing an additional protection in common mode (two wires with respect to ground), as transients coupled to the PCM line always travel in common mode through the regenerators remote power circuit. This additional protection has been designed on a printed circuit board with four one-pole connectors so that it can be inserted on the regenerator board of the NPCMLE after removing two components of its remote power circuit which are replaced.

The longitudinal protector of the present invention comprises a passive electrical circuit which is installed in the regenerator replacing two of its components and which, in the event of coupling of transient overcurrents in the remote power circuit, can absorb pulses with decay times to half-peak value above 40 milliseconds without any damage of the regenerator.

The longitudinal protector comprises four monopolar pins with height adjusted for the NPCMLE regenerator, a gas discharger, a power resistance and a transient absorber.

The protection circuit is mounted on a fibreglass plate.

### BRIEF DESCRIPTION OF THE DRAWINGS

These and further characteristics and advantages of the invention will be better understood in view of the following description of a preferred embodiment, made with reference to the accompanying drawings where for purposes of illustration only the following is shown:
Figure 1.- Shows a view of the circuit diagram for the protection equipment for PCM installations.
Figure 2.- Shows a simplified circuit diagram for an NPCMLE system regenerator.
Figure 3.- Shows a circuit diagram of an NPCMLE regenerator after its modification upon connecting the protection equipment for PCM installations.

### DESCRIPTION OF A PREFERRED EMBODIMENT

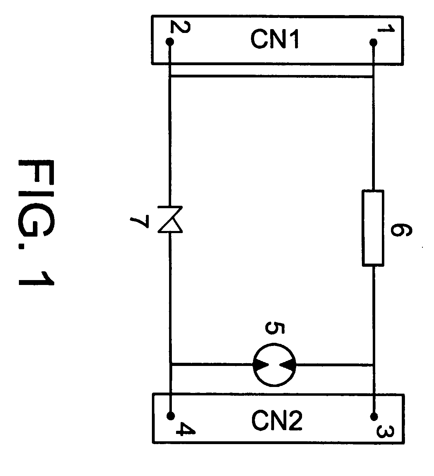

A detailed description of the invention is made with constant reference to the accompanying drawings, in which figure 1 shows a schematic representation of the protection equipment for pulse code modulation installations, which is designed to operate in the remote power system of New Pulse Code Modulation Line Equipment (NPCMLE) system regenerators, being able to absorb fast and slow transients leaving a harmless remnant voltage.

The protection equipment consists of four monopolar connectors (1-4) which are to be inserted in the NPCMLE regenerators with a height adjusted for the NPCMLE regenerator, a gas discharger (5), a power resistor (6) and a transient absorber (7).

Gas discharger (5) is meant to bypass longitudinally (that is, between the regenerator input and output) the remote power circuit in the event of high current transients, so that this current does not pass through the most sensitive electronic components.

Power resistor (6) placed in series replaces the NPCMLE regenerator resistor, although with a considerably increased rated power and therefore an increased resistance to high energy transients.

Finally, transients absorber (7) is in charge of cutting off the maximum voltage value arriving at the regenerator remote power system. It consist of a Zener diode which conducts at 6V.

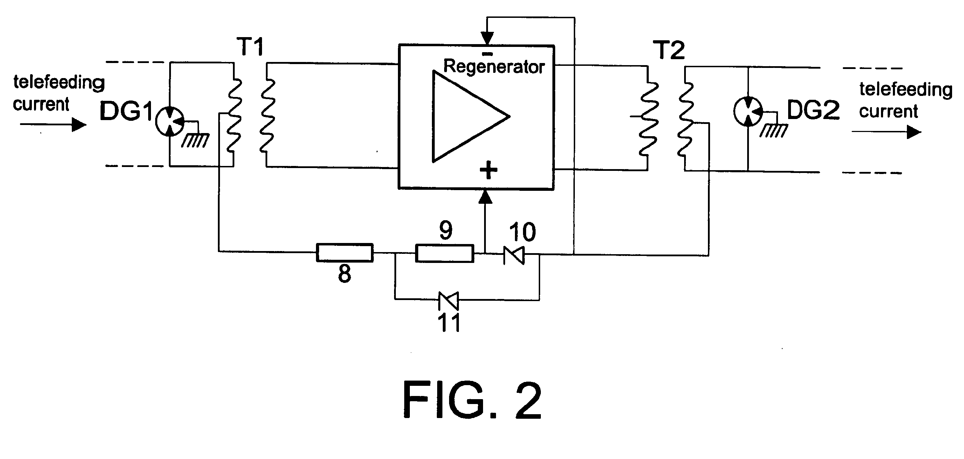

Figure 2 shows the simplified circuit diagram of a NPCMLE system regenerator, in which can be seen the galvanic continuity between its input and output wires through the remote power circuit (8-10) and the primary coils of the line transformers.

This continuity between input and output implies that if there are transient longitudinal inductions (the majority of actual situations in balanced systems such as the NPCMLE), high currents flow through the components of the remote power circuit.

In fact, most malfunctions occurring in this type of regenerators are due to breakage of resistor (8), which has a lower immunity threshold to transients than protector (11).

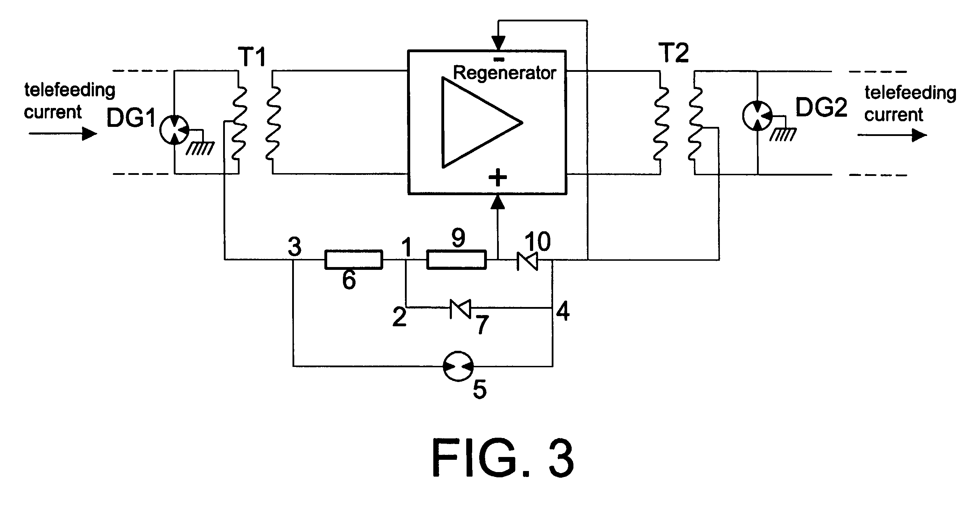

Figure 3 shows the circuit diagram for the NPCMLE regenerator, after modification due to connection of the Protection Equipment for Pulse Code Modulation Installations.

In order to install the protection equipment board on the printed circuit board of the regenerator it is necessary to unsolder and eliminate resistor (8) and protector (11), so that the board of the protection equipment of the invention is connected by four individual pins (1-4) in the positions of these components.

Components (6-7) which replace the former ones (8 and 11) have a similar behaviour to these in absence of transients, and show a much higher resistance to transients.

The introduction of gas discharger (5), with a very low trigger voltage, ensures that higher energy longitudinal transients do not travel through the components of the remote power system, providing an effective protection against them.

This description is not continued in the understanding that any expert in the field can understand the scope of the invention and the advantages derived thereof, as well as develop and reduce to practice the object of the invention.

Nonetheless it must be understood that the invention has been described according to a preferred embodiment for it, so that it may undergo changes without altering its essence, said changes particularly referring to changes in size, shape, materials and/or arrangement of the whole or its component parts.

## Claims

1. Protection equipment for pulse code modulation installations against transients in remote power cables, **characterised in that** it comprises four monopolar connectors (1-4) with height adjusted to be inserted in a regenerator of a New Pulse Code Modulation Line Equipment, the protection equipment further comprising:
a gas discharger (5) connected between a third connector (3) and a fourth connector (4), which longitudinally bypasses the remote power circuit in the event of high current transients,
a power resistor (6) connected between said third connector (3) and a first connector (1),
a transient absorber (7) connected between said fourth connector (4) and a second connector (2), which is meant to cut off the maximum voltage value arriving at the regenerator remote power circuit,
and wherein the first and second connectors (1),(2), are short-circuited.

2. - Pulse Code Modulation Line Equipment regenerator **characterised in that** it comprises a protection equipment according to claim 1, and wherein the protection equipment is mounted on a printed circuit board and it is connected to said regenerator by means of said four monopolar connectors (1-4).

## Patentansprüche

1. Schutzvorrichtung für Pulskodemodulations-Einrichtungen gegen Transienten in Fernnetzleitungen, **dadurch gekennzeichnet, dass** sie vier monopolare Anschlüsse (1 - 4) umfasst mit einer Höhe, die angepasst ist, um in einen Regenerator einer Neuen Pulskodemodulations-Leitungsvorrichtung eingesetzt zu werden, wobei die Schutzvorrichtung ferner umfasst:
eine Gasentladungseinrichtung (5), die zwischen einen dritten Anschluss (3) und einen vierten Anschluss (4) geschaltet ist, welche die Fernnetzschaltungsanordnung im Falle hoher Stromtransienten längs umgeht,
einen Leistungswidersstand (6), welcher zwischen den dritten Anschluss (3) und einen ersten Anschluss (1) geschaltet ist,
eine Transientenabsorptionseinrichtung, welche zwischen den vierten Anschluss (4) und einen zweiten Anschluss (2) geschaltet ist, welche bestimmt ist zum Abschneiden des maximalen Spannungswerts, welcher an der Regeneratorfernnetzschaltungsanordnung ankommt,
und wobei der erste und der zweite Anschluss (1), (2) kurz geschlossen sind.

2. Pulskodemodulations-Leitungsvorrichtungs-Regenerator, **dadurch gekennzeichnet, dass** er eine Schutzvorrichtung nach Anspruch 1 umfasst, und wobei die Schutzvorrichtung auf einer Leiterplatte montiert ist und sie mit dem Generator mittels der vier monopolaren Anschlüsse (1 - 4) verbunden ist.

## Revendications

1. Dispositif de protection pour des installations de modulation par impulsions codées (PCM) contre les transitoires dans les câbles de puissance à distance, **caractérisé en ce qu'**il comprend quatre connecteurs monopolaires (1-4) à hauteur ajustée pour être introduits dans un régénérateur d'un Nouveau Dispositif de Ligne de Modulation par Impulsions Codées, le dispositif de protection comprenant en outre :
un déchargeur de gaz (5) connecté entre un troisième connecteur (3) et un quatrième connecteur (4), qui dérive longitudinalement le circuit de puissance à distance dans le cas de transitoires de courant élevé,
une résistance de puissance (6) connectée entre ledit troisième connecteur (3) et un premier connecteur (1),
un absorbeur de transitoires (7) connecté entre ledit quatrième connecteur (4) et un second connecteur (2), qui est censé couper la valeur de tension maximale arrivant au circuit de puissance à distance du régénérateur,
et dans lequel les premier et second connecteurs (1), (2) sont court-circuités.

2. Régénérateur de Dispositif de Ligne de Modulation par Impulsions Codées, **caractérisé en ce qu'**il comprend un dispositif de protection selon la revendication 1, et dans lequel le dispositif de protection est monté sur une plaquette de circuit imprimé et il est connecté audit régénérateur au moyen de quatre connecteurs monopolaires (1-4).
